# EUROPÄISCHE PATENTSCHRIFT

(11) **EP 0 312 829 B1**
(45) Veröffentlichungstag und Bekanntmachung des Hinweises auf die Patenterteilung: **20.07.1994**
(21) Anmeldenummer: 88116427.1
(22) Anmeldetag: 05.10.1988
(51) Int. Cl.: H01J 47/06, G01T 1/29

(54) **Zweidimensionales Proportionalzählrohr zur ortsempfindlichen Messung von ionisierender Strahlung**
Twodimensional proportional counter for the position sensitive measurement of ionizing radiation
Compteur proportionnel à deux dimensions pour la mesure et le repérage spatial de rayonnement ionisant

(30) Priorität: 17.10.1987 DE 3735296
(43) Veröffentlichungstag der Anmeldung: 26.04.1989
(73) Patentinhaber: LABORATORIUM PROF. DR. RUDOLF BERTHOLD GmbH & Co. KG, 75323 Bad Wildbad (DE)
(72) Erfinder: Filthuth, Heinz, Prof. Dr., D-7540 Neuenbürg (DE)
(74) Vertreter: Frank, Gerhard, Dipl.-Phys.

(56) Entgegenhaltungen:
- DE-A- 3 002 950
- IEEE TRANSACTIONS ON NUCLEAR SCIENCE, vol. NS-23, no. 1, February 1976, Seiten 279-280, New York, US; P. LECOMTE et al.: "The delay line readout technique applied to proportional chambers using electronegative gas mixtures"
- IEEE TRANSACTIONS ON NUCLEAR SCIENCE, vol. NS-31, no. 1, February 1984, Seiten 258-263, IEEE, New York, US; J-P. RICHER et al.: "Cross talk in multielectrode particle detectors"
- IEEE TRANSACTIONS ON NUCLEAR SCIENCE, vol. NS-21, no. 1, February 1974, Seiten 45-50, New York, US; V. PEREZ-MENDEZ et al.: "Recent developments in delay line readout of multiroire proportional chambers"
- NUCLEAR INSTRUMENTS & METHODS, vol. 190, no. 3, Dec. 1981, Seiten 627-638, North-Holland Publishing Company, Amsterdam, NL; R. BELLAZZINI et al.: "A MWPC with a cathode coupled delay line read-out as radioactivity detector for DNA repair studies"

## Beschreibung

Die Erfindung betrifft ein zweidimensionales Proportionalzählrohr zur ortsempfindlichen Messung von ionisierender Strahlung nach dem Oberbegriff des Patentanspruches 1.

Ein derartiges Proportionalzählrohr ist beispielsweise aus der Veröffentlichung NIM 106 (1973), Seiten 397-406 (Kaplan et al) und NIM 152 (1978), Seiten 191-194 (Gabriel et al) bekannt. Bei dem aus der erstgenannten Veröffentlichung vorbekannten Proportionalzählrohr sind drei Drahtgitter in separaten Kunstharzrahmen gehalten, die aufeinandergelegt werden. Damit lassen sich nach Angaben in dieser Veröffentlichung Gitterabstände von 3 - 10 mm erreichen, bei einer Abmessung der Drahtgitter von 20x20 cm².

Die beiden Verzögerungsleitungen (delay-line) sind an die aus dem jeweiligen Rahmen herausgeführten Kathode-Drähten, die als Auslesedrähte wirken, aufgelegt, wodurch eine kapazitive Einkopplung der Signale auf den Kathode-Drähten in die zugehörige Verzögerungsleitung erreicht wird.

Bei der zweitgenannten Veröffentlichung (Seite 193) sind die Kathodendrähte direkt mit einzelnen, individuellen Abschnitten der Verzögerungsleitung verbunden; die Verzögerungsleitung ist hierbei als sogenannte "lumped-delay-line" ausgeführt, wie sie beispielsweise aus einer Veröffentlichung der CERN-LEP-Division "The Delay Wire Chamber Description" (Manarin et al) vom 06. Februar 1985 bekannt ist. Hierbei besteht die Verzögerungsleitung aus Spulenabschnitten mit Ferritkernen, zwischen denen jeweils Abgriffe (taps) im Abstand der Kathode-Drähte angebracht sind und an denen die Signale der Kathode-Drähte in die Verzögerungsleitung eingekoppelt werden. An den Abgriffen sind jeweils Kapazitäten angeordnet, die zum Abgleich der einzelnen Spulensbschnitte dienen; jedem diskretem Spulenabschnitt ist somit ein diskreter Kapazitätswert zugeordnet.

Ein gattungsgemäßes Proportionalzählrohr ist ferner noch aus der US-A-3,772,521 (Perez-Mendez) bekannt.

Schließlich zeigt noch die Veröffentlichung NIM 190 (1981), Seiten 627-638 (Bellazzini et al) ein gattungsgemäßes Proportionalzählrohr, bei dem zur Auswertung eine kontinuierliche Verzögerungsleitung eingesetzt wird, die - wie bei den erstgenannten Veröffentlichungen - mit den Kathoden-Drähten kapazitiv gekoppelt ist. Bei dem Proportionalzählrohr gemäß dieser Veröffentlichung ist der Abstand zwischen den Kathoden-Drahtgittern und dem Anoden-Drahtgitter 6 mm, wobei die Zählkammer aus sechs Fiberglasrahmen zusammengesetzt ist, von denen die inneren entsprechend 6 mm stark sind und jeweils eines der drei Drahtgitter tragen. Die aktive Fläche dieses Proportionalzählrohrs beträgt 25x25 cm².

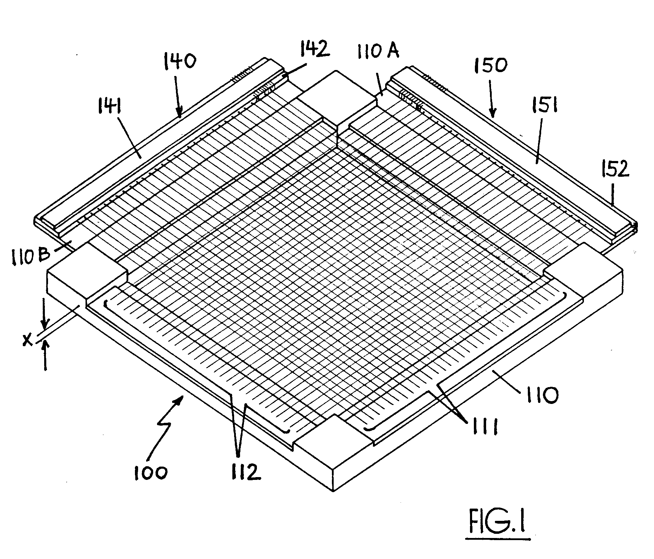

Eine weitere Veröffentlichung ("IEEE Transactions on Nuclear Science, Band NS-21, Nummer 1, Februar 1974, Seiten 45-50, New York, US: V. Perez-Mendez et al: Recent developments in delay line readont of multiwire proportional chambers") beschreibt die Vorteile einer verbesserten kapazitiven Kopplung der Auslesedrähte an ihre zugehörige Verzögerungsleitung durch eine nunmehr "direkte" oder "feste" Kopplung (Seite 47, linke Spalte, Zeilen 3-41), bei der "pads" aus bedruckten Leiterplatten zwischen den zur Auslesung verwendeten Kathodendrahtebenen und den unter bzw. über die Verzögerungsleitung geführten Drähten gelegt sind (Figur 1 in Verbindung mit Seite 46, rechte Spalte, Zeilen 1-5 und letzter Absatz sowie Seite 47, linke Spalte, Zeilen 1-2).

Diese Technologie bestätigt der Verfasser dieser Veröffentlichung nochmals zwei Jahre später (IEEE Transactions on Nuclear Science, Band NS-23, No. 1, Februar 1976, Seiten 279, 280, P. Lecomte, V. Perez-Mendez und G. Stoker: The Delay Line Readout Technique Applied To Proportional Chambers Using Electronegative Gas Mixtures), wo nochmals auf die Vorteile kapazitiver Ankopplung hingewiesen wird (Seite 279, linke Spalte, 4. Absatz), aber auch für bestimmte Anwendungsbereiche wieder auf die Technik der oben geschilderten "lumped delay line" hingewiesen wird (Seite 279, rechte Spalte, Zeile 1); letztere Technik soll besonders vorteilhaft sein zur Erzielung von hohen delay/rise time-Verhältnissen, wenn es auf eine extreme Ortsauflösung nicht primär ankommt (Seite 279, linke Spalte, letzter Absatz).

Um eine hohe Ortsauflösung zu erreichen, ist es einerseits wünschenswert, die zur Auslesung verwendeten Drahtgitter möglichst nahe aneinander bzw. an das Anoden-Drahtgitter heranzurücken, insbesondere, um unerwünschte Parallaxen-Effekte zu minimieren, die durch schräg verlaufende Bannen von Sekundär-Partikeln bedingt sind. Andererseits bringt die Reduzierung dieser Ebener-Abstände die Schwierigkeit mit sich, daß bei Zählkammern der genannten Größenordnung mechanische Stabilitätsprobleme und Toleranzprobleme auftreten, die dazu führen, daß die relative Schwankung der Gitterabstände Ausmaße annimmt, die zu einer Beeinträchtigung der Meßqualität führen. Dies liegt hauptsächlich daran, daß der Abstand des Anoden-Drahtgitters zum Kathoden-Drahtgitter, also der Ausleseebene, die Verstärkung des Zählimpulses beeinflußt, somit such dessen Impulsform und dadurch letztlich die Ortsauflösung. Lokale Toleranzen innerhalb dieser Abstände führen daher zu lokalen Schwankungen in der Ladungsvervielfachung und zu einer Verschlechterung der Meßqualität.

Eine aus den genannten Gründen erwünschte Minimierung der Ebenenabstände führt leider auch dazu, daß infolge des reduzierten mittleren Weges der Partikel im Zählgas die Primärionisation nur gering ist, was zu einer Verringerung der Impulsamplituden auf den Auslesegittern führt; eine Erhöhung der Hochspannung, die diesem Effekt entgegenwirken kann, wird aber ihrerseits begrenzt durch die oben erwähnten relativen lokalen Toleranzen in den Gitterabständen; die Neigung zu Durchschlagserscheinungen an Stellen mit geringerem Drahtabstand als dem Mittelwert nimmt daher zu. Daraus folgt, daß bei sehr geringen Abständen der Gitterebenen auch nur eine geringe Impulshöhe zur Verfügung steht. Dies wiederum erfordert von der elektronischen "Weiterverarbeitung", zumindest also von der den Auslesegittern zugeordneten Verzögerungsleitung, eine optimale Qualität in dem Sinn, daß das von einem Gitter anstehende Ortssignal möglichst ungeschwächt in die Verzögerungsleitung eingekoppelt wird, und dort mit geringstem Verlust und möglichst "formtreu", d.h. ohne Reflexionen und mit möglichst steilem Flankenanstieg, zum jeweiligen Ende der Verzögerungsleitung gelangt, wo dann in der elektronischen Auswertung die Ortsinformation gewonnen wird, deren Qualität (Ortsauflösung) wesentlich von der Einhaltung dieser Bedingungen bestimmt wird. Erschwerend für die Praxis kommt noch hinzu, daß die Drähte der einzelnen Drahtebenen untereinander Kapazitäten bilden, die die Signalweiterleitung umso stärker beeinflussen, je kleiner der Drahtabstand ist.

Hier erweisen sich die vorbekannten Lösungen als ungeeignet: Die kapazitive Einkoppelung der Signale in die Verzögerungsleitung, beispielsweise gemäß Kaplan et al oder der US-A-3,772,521 (Perez-Mendez) bringt einen starken Signalverlust mit sich, der zwangsläufig zu einer Erhöhung des Rauschanteils führt, mit der Konsequenz einer Beeinträchtigung der "Formtreue" des Signals und somit der Ortsauflösung. Die Einkoppelung der Signale in eine segmentweise, diskret aufgebaute Verzögerungsleitung ("lumped delay line") gemäß Gabriel et al, erfordert eine extrem genaue, in jedem Einzelfall vorzunehmende Abgleichung der Kapazitätswerte jeden Abschnitts, insbesondere, um Signalreflexionen zu reduzieren, die ebenfalls die "Formtreue" des Signals und damit die Ortsauflösung beeinträchtigen. Dies ist in der Serienfertigung mit vernünftigem Aufwand nicht realisierbar.

Es ist daher Aufgabe der Erfindung, die Zählkammer und die Verzögerungsleitungen von derartigen Proportionalzählrohren so auszugestalten, daß bei einer Minimierung des Abstandes der Drahtgitter untereinander bei mechanisch und elektrotechnisch einfachem Aufbau eine wirksame Erhöhung der Ortsauflösung erreicht wird.

Diese Aufgabe wird gemäß dem kennzeichnenden Teil des Patentanspruchs 1 gelöst.

Durch die direkte Ankoppelung der Drähte der zur Auslesung verwendeten Drahtgitter an ihre zugehörige Verzögerungsleitung lassen sich die oben erwähnten Bedingungen derart optimal erfüllen, daß der Abstand des bzw. der Kathodendrahtgitter zum Anodendrahtgitter, der die Ortsauflösung wesentlich bestimmt, bis in den Bereich von 1 bis 2 mm reduziert werden kann. Vorteilhafte Ausgestaltungen der Verzögerungsleitung, deren Aufbau grundsätzlich aus der DE-A-30 02 950 bekannt ist, sehen bei einem Abstand der Drähte der Auslesegitter von 2 mm voneinander vor, daß die Breite des Kapazitätsstreifens etwa 1 cm beträgt, dessen Abstand von der Oberseite der Verzögerungsleitung etwa 20» und die Windungszahl 30 pro cm beträgt. Bei einer solchen Anordnung lassen sich ein delay-rise-time-Verhältnis von 25 erzielen und der Impulshöhenverlust in der Verzögerungsleitung kann auf unter 10% begrenzt werden. Die durch den Kapazitätsstreifen bewirkte Kapazität liegt hoch genug, daß die störenden Kapazitäten der parallel laufenden Drähte praktisch keine Rolle mehr spielen und die Signalform nicht ungünstig beeinflussen, da diese insgesamt nur etwa 200 pF betragen.

Diese Ankoppelung in Verbindung mit der Ausgestaltung der Verzögerungsleitung ermöglicht eine derartig hochwertige elektronische Impulsverarbeitung in der Verzögerungsleitung, daß bei der nachfolgenden elektronischen Auswertung Ortsauflösung bei β-Strahlung von etwa 1 mm erzielt werden können.

Nach einer weiteren Ausgestaltung ist vorgesehen, daß insgesamt drei Drahtgitterebenen vorgesehen sind, wobei ein Anodendrahtgitter zwischen zwei orthogonal zueinander verlaufenden Kathodendrahtgittern angeordnet ist. Vorzugsweise sind zwei dieser Drahtgitter auf einem gemeinsamen Rahmen befestigt, so daß durch eine entsprechende präzise mechanische Bearbeitung der zueinander parallelen Oberflächenbereiche dieses Rahmens auch eine exakte Einhaltung der Abstände dieser beiden Drahtgitter gewährleistet ist. Für die dritte Drahtgitterebene, das zweite Kathodendrahtgitter ist dann ein weiterer Rahmen vorgesehen, der auf den ersten Rahmen aufgesetzt wird.

Alternativ hierzu kann auch vorgesehen sein, daß auf einem gemeinsamen Rahmen lediglich zwei Drahtgitter vorgesehen sind, wobei dann in diesem Falle das Anodendrahtgitter gleichzeitig zur Auslesung der Impulse herangezogen wird und mit einer Verzögerungsleitung verbunden ist. Diese Konzeption ermöglicht einen besonders flachen und exakten Aufbau der Drahtgitter. Der bzw. die beiden Rahmen mit den Drahtgittern bilden die Zählkammer, die gegebenenfalls nach oben und unten mit einer Abdeckung versehen ist, um ein geschlossenes Zählgasvolumen zu erreichen.

Vorzugsweise wird zur weiteren Verbesserung der Ortsauflösung die Zählkammer mit einem Zählgas betrieben, das Zusätze von Methylal und/oder n-Pentan und/oder Freon und/oder CO₂ in einem Gesamtvolumenanteil von 1% bis 5% enthält.

Grundsätzlich kann die Zählkammer jedoch auch mit "normalem" Zählgas ohne die genannten Zusätze betrieben werden.("P 10-Gas": 90% Argon; 1 0% Methan) oder auch Xenon, insbesondere zum Nachweis von γ-Strahlung. Nach einer weiteren Ausgestaltung ist die derart aufgebaute Zählkammer innerhalb eines Gehäuses stationär untergebracht, das auf seiner Oberseite mit einem abnehmbaren Fenster versehen ist. Sofern die Zählkammer nach oben auch mit einem derartigen Fenster abgeschlossen ist und der Objektträger die Zählkammer von unten abschließt, kann folglich durch das Gehäuse durch die Zähldrahtebenen hindurch auf die gemessene Platte gesehen werden, wodurch eine einfache Kontrolle ermöglicht wird, ob die Platte einwandfrei eingelegt ist oder ob eventuell Verunreinigungen vorhanden sind, die eine einwandfreie Messung stören würden.

Weiterhin ist vorgesehen, daß das Gehäuse zweiteilig ausgebildet ist, wobei die Zählkammer im Oberteil angeordnet ist und der Boden dieses Oberteils als Rahmen ausgebildet ist, dessen Öffnung unterhalb der Drahtgitter der Zählkammer angeordnet ist, und dessen lichter Querschnitt zumindest der Fläche der Drahtgitter entspricht.

Dadurch wird eine Einfuhröffnung geschaffen, die vorteilhafterweise gemäß einer weiteren Ausgestaltung dafür vorgesehen ist, daß eine Einrichtung zur Zuführung von Objektträgern durch diese Einfuhröffnung in einem Unterteil des Gehäuses eingebracht ist, auf dem das Oberteil aufsitzt.

Diese Zuführungseinrichtung beinhaltet im wesentlichen einen schubladenähnlichen Wechselschlitten mit einer Trägerplatte, der horizontal aus dem Unterteil des Gehäuses ein- und ausfahrbar ist und in seiner Position unterhalb der Zählkammer die Objektplatte nach oben durch die Einfuhröffnung des Oberteils verfährt, bis die Platte an der Unterseite der Zählkammer anliegt.

Weitere konstruktive Ausgestaltungen dieser Zuführungseinrichtung sind den Unteransprüchen zu entnehmen.

Diese Ausgestaltung der Erfindung gestattet die vollautomatische Messung einer Objektplatte, die lediglich außerhalb des Gehäuses auf den Wechselschlitten aufgelegt werden muß und nach der Messung von dort wieder entnommen werden kann.

Zur Ergänzung dieser Vorrichtung ist vorgesehen, daß vor der Einschuböffnung des Wechselschlittens im Unterteil ein Magazin positioniert ist, das mehrere Objektträger aufnimmt. Dieses Magazin kann mit mehreren Aufnahmeebenen ausgerüstet sein, die vertikal verfahrbar sind, so daß der Wechselschlitten nacheinander eine Anzahl von Objektträgern aus dem Magazin entnehmen, messen und wieder in das Magazin zurückbringen kann.

Zwei Ausführungsbeispiele der erfindungsgemäßen Zählkammer und deren Gehäuse werden nun anhand von Zeichnungen näher erläutert, es zeigen:
- Figur 1:: Eine perspektivische Darstellung eines ersten Ausführungsbeispiels der Zählkammer mit zwei Drahtgitterebenen,
- Figur 2:: eine Explosionsdarstellung eines zweiten Ausführungsbeispiels einer Drahtkammer mit drei Drahtgitterebenen,
- Figur 3:: eine perspektivische Detaildarstellung der in den Figuren 1 und 2 gezeigten Verzögerungsleitung,
- Figur 4:: einen ersten Querschnitt durch das Proportionalzählrohr in der Ebene IV-IV der Figur 6,
- Figur 5:: eine zweite Schnittdarstellung in der Ebene V-V der Figur 4,
- Figur 6:: eine dritte Schnittdarstellung mit ausgefahrenem Wechselschlitten in der Ebene VI-VI der Figur 4,
- Figur 7:: eine schematische Schnittdarstellung durch das Proportionalzählrohr mit zugeordnetem Magazin,
- Figur 8:: ein Blockschaltbild der Auswerteeinheit.

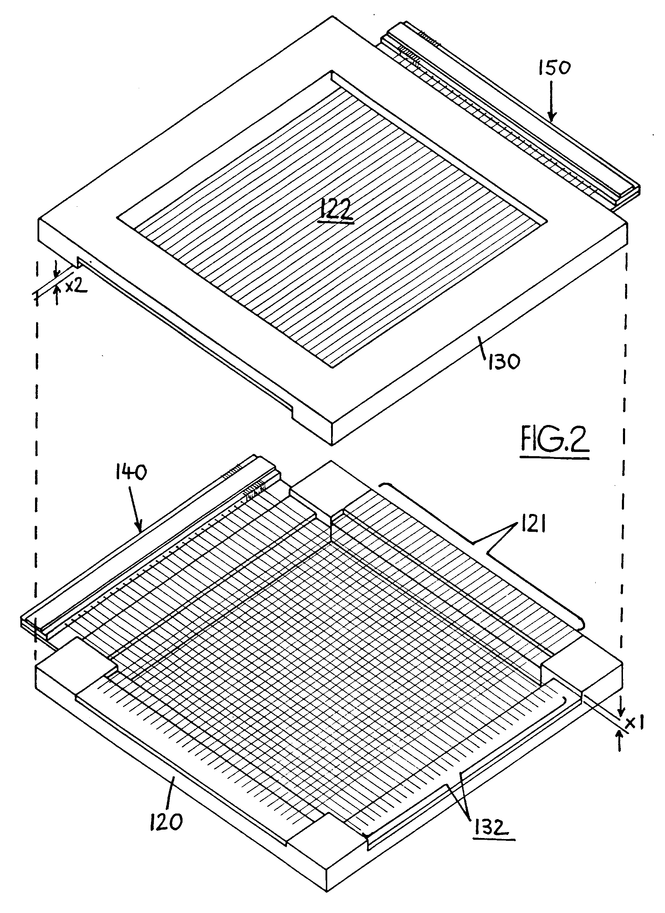

Figur 1 zeigt ein erstes Ausführungsbeispiel einer Zählkammer 100, bei dem zur Verdeutlichung eventuell vorgesehene obere und untere Abdeckungen, beispielsweise als Fenster, nicht dargestellt sind. Die Seitenwandungen der Zählkammer 100 werden von einem quadratischen Rahmen 110 gebildet; zwei gegenüberliegende Seiten dieses Rahmens 110 sind um ein Maß X gegenüber dem übrigen Rand abgesenkt, so daß diese abgesenkten Randbereiche eine tiefer liegende Ebene gegenüber der Ebene der orthogonal hierzu liegenden Randbereiche definieren. Jeweils einer der Randbereiche beider Ebenen ist mit einem Ansatzteil 110A,110B versehen. Auf diesem Ansatzteil 110A,110B befindet sich eine Verzögerungsleitung 140,150, die aus einem Isolatorkern besteht, um den Windungen einer Spule gewickelt sind, sowie aus einem Kapazitätsstreifen 141,151 auf einer Oberseite der Verzögerungsleitung. Mit den Windungen der Spule (die zur Vereinfachung in Figuren 1 und 2 nur teilweise dargestellt ist) sind in gleichen Abständen Drähte verbunden, die quer über den Rahmen 110 gespannt und auf der gegenüberliegenden Seite festgemacht sind. Dadurch entstehen zwei zueinander orthogonal verlaufende Drahtgitter 111,112, deren Abstand voneinander dem Maß X entspricht.

Diese beiden Drahtgitter 111 und 112 dienen zur Auslesung von Impulsen, die an bestimmter Stelle der Zählfläche innerhalb der Zählkammer 100 von geladenen Partikeln verursacht werden. An einer bestimmten Stelle wird somit in beiden Drahtgittern bei einem derartigen Ereignis ein Impuls erzeugt, der zur zugeordneten Verzögerungsleitung 140,150 gelangt und von dort in bekannter Weise einer Auswerteeinheit zugeführt wird, die aus der Laufzeit der Impulse die jeweilige Koordinate und somit den Entstehungspunkt des Impulses in der Zählkammer ermittelt.

Beim Ausführungsbeispiel der Figur 1 dient ein Drahtgitter als Kathodendrahtgitter, also lediglich zur Auslesung der Impulse, wogegen das andere Drahtgitter auf Anodenpotential liegt und gleichzeitig zur Auslesung auch zur Hochspannungsversorgung der Zählkammer dient.

Bei dem in Figur 2 dargestellten zweiten Ausführungsbeispiel der Zählkammer sind diese Funktionen getrennt, d.h., es sind zur Auslesung zwei Kathodendrahtgitter 122,132 und ein in der Mitte hierzu liegendes Anodendrahtgitter 121 vorgesehen. Das untere Kathodendrahtgitter 132 und das Anodendrahtgitter 121 befinden sich wie beim ersten Ausführungsbeispiel der Figur 1 auf einem gemeinsamen Rahmen 120, dem jedoch nur eine Verzögerungsleitung 140 zugeordnet ist. Das zweite Kathodendrahtgitter 122 ist in einen zweiten Rahmen 130 eingespannt, der dann auch die zweite Verzögerungsleitung 150 trägt. Durch entsprechende Einschnitte in den Rahmen 120,130 werden, wie oben beschrieben, Abstände X1 und X2 der einzelnen Drahtebenen untereinander erreicht, wenn die beiden Rahmen 120 und 130 zur Bildung der Zählkammer 100 aufeinandergesetzt sind.

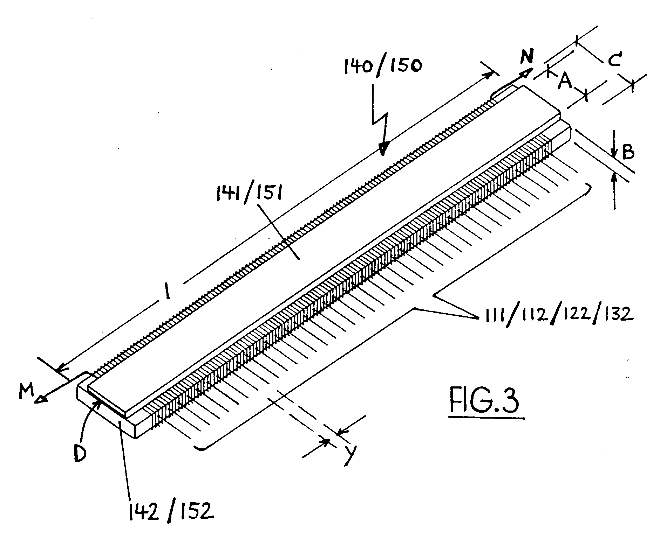

Figur 3 zeigt eine Detaildarstellung einer der Verzögerungsleitungen 140,150, wie sie bei den Zählkammern gemäß Figuren 1 und 2 verwendet werden. Jede Verzögerungsleitung 140,150 besteht aus einem flachen Isolatorkern 142,152, um den die Wicklungen einer Spule gewickelt sind. Bei einem bevorzugten Ausführungsbeispiel weist der Isolatorkern eine Breite C von 25mm und eine Dicke B von 1,5mm auf, bei einer Gesamtlänge l von 20 cm. Um diesen Isolatorkern ist die Spule mit einer Windungszahl Z von 30 Windungen pro cm aufgewickelt. Auf der Oberseite der derart gebildeten Spule befindet sich ein als Kapazitätsstreifen 141/151 wirkender Metallstreifen mit einer Breite A von 2 cm, der im Abstand D von 20» von der Spulenoberfläche gehalten ist. In gleichen Abständen y von 2mm sind die einzelnen Drähte der Drahtgitter 111/112/122/132 an die Windungen der Spule an deren Schmalseite in direktem Kontakt aufgebracht, z.B. eingedreht, so daß jede sechste Windung der Spule mit einem Drahtanschluß versehen ist.

Eine derartig aufgebaute Verzögerungsleitung weist eine Induktivität von etwa 10⁻⁴H und eine Kapazität von etwa 10³pF auf. Bei diesen Werten wird eine optimale, d.h. unverzerrte und minimal geschwächte Weiterleitung eines auf den Drähten eingekoppelten Signales zu den Enden M,N der Verzögerungsleitung erreicht, wobei der minimale Impulshöhenverlust von unter 10% im wesentlichen auf die direkte Ankoppelung der Drähte der Drahtgitter an die Windungen der Spule der Verzögerungsleitung zurückzuführen ist.

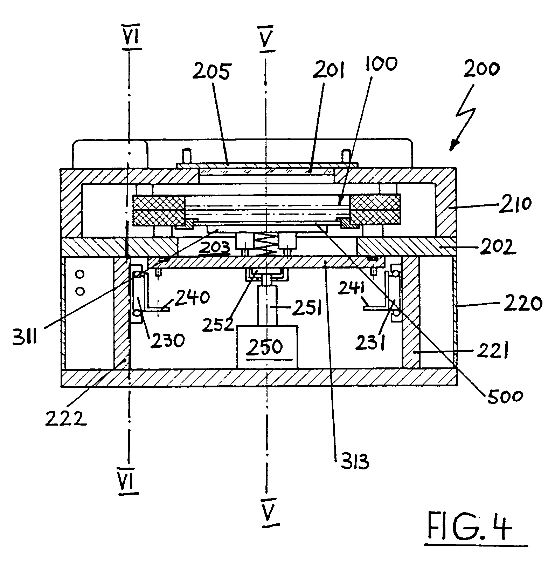

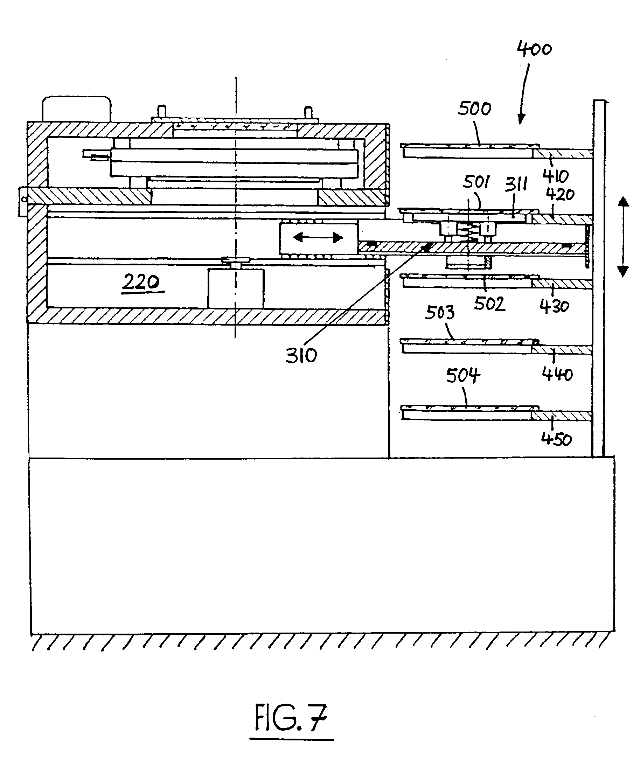

Die Figuren 4 und 6 zeigen Schnittdarstellungen durch ein vollständiges Proportionalzählrohr, in dem die in Figur 2 beschriebene, aus zwei Rahmen 120,130 aufgebaute Zählkammer 100 untergebracht ist.

Das Proportionalzählrohr besteht aus einem Gehäuse 200, das seinerseits zweiteilig aufgebaut ist, nämlich aus einem Oberteil 210 und einem Unterteil 220, wobei Oberteil 210 und Unterteil 220 über ein Gelenk 204 klappbar oder schwenkbar miteinander verbunden sind.

Das Oberteil 210 dient zur Aufnahme der Zählkammer 100, die nach oben mit einem Zählkammerfenster 101 abgedeckt ist. Den Boden des Oberteils 210 bildet ein Rahmen 202, der eine mittige Öffnung 203 aufweist. Diese Öffnung liegt unterhalb der Drahtgitterebenen der Zählkammer 100. Die Zählkammer 100 stützt sich nach oben und nach unten auf Sockeln 103 ab.

Zur Fixierung eines Meßobjektes an der Unterseite der Zählkammer 100 sind entlang dem inneren, unteren Rand der Zählkammer 100 Profilschienen 102 eingelegt, deren Funktion weiter unten erläutert wird.

Während, wie beschrieben, das Oberteil 210 des Gehäuses 200 im wesentlichen zur Aufnahme der Zählkammer 100 und eines Aufsatzes 600 für die Nachweiselektronik dient, ist das Unterteil 220 zur Aufnahme einer Zuführungseinrichtung für Meßplatten 500 ausgestaltet, wie dies im folgenden erläutert wird:

An inneren Seitenwandungen 221,223 sind horizontale Teleskopschienen 230,231 gehalten, an deren Innenseite Winkelprofile 240,241 befestigt sind. Diese Teleskopschienen 230,231 erstrecken sich somit beidseitig der Öffnung 203 des Rahmens 202. Die horizontalen Flächen der Winkelprofile 240,241 dienen zur Aufnahme einer Grundplatte 313, die dort lösbar aufsitzt, wobei die vertikalen Flächen der Winkelprofile 240,241 gleichzeitig als vertikale Begrenzung und Führung der Grundplatte 313 dienen.

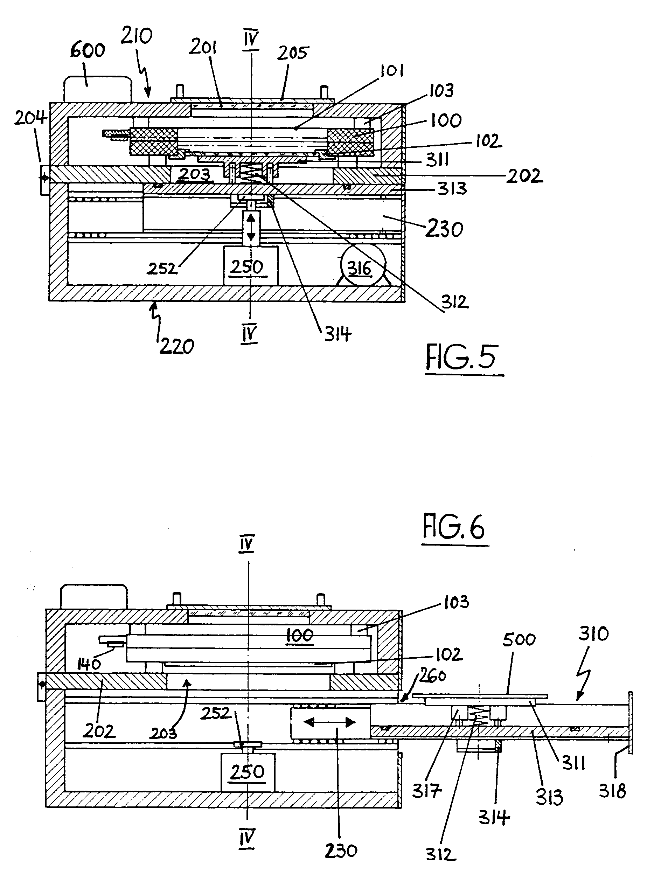

Ein in Figur 5 angedeuteter Motor 316 kann über einen Zahnstangentrieb diese Teleskopschienen bzw. Winkelprofile antreiben, so daß folglich die Grundplatte 313 in ihrer auf den Winkelprofilen 240,241 abgesenkten Position horizontal aus dem Unterteil 220 herausfahrbar ist, wie dies insbesondere in Figur 6 erkennbar ist.

Auf der Grundplatte 313 befinden sich Teleskopelemente 317, die eine Trägerplatte 311 aufnehmen, auf der eine auszumessende Platte 500 abgelegt werden kann. Zwischen den Teleskopelementen 317 ist ein Federelement 312 angeordnet, das die Trägerplatte 311 nach oben drückt. An der Vorderseite der Grundplatte 313 bzw. der Teleskopschienen 230,231 ist eine Frontplatte 318 angebracht, die im eingeschobenen Zustand die Öffnung im Unterteil 220 des Gehäuses 200 abdeckt.

Die Grundplatte 313 und die übrigen oben beschriebenen Bauteile bilden somit einen Wechselschlitten 310, mit dem ein zu messendes Objekt 500 von außerhalb des Gehäuses 200 in den Bereich unterhalb der Zählkammer 100 schubladenähnlich verfahren werden kann.

An der Unterseite der Grundplatte 313 befindet sich ein taschenähnlicher Ansatz 314, dessen in Richtung zum Gehäuse 200 zeigendes Ende offen ist.

Auf dem Boden des Unterteils 220 ist ein Antreibsaggregat 250 mit einem Kolben 251 etwa mittig unterhalb der Zählkammer 100 im Oberteil 210. Der Kolben 251 ist nach oben in Richtung zur Zählkammer 100 hydraulisch, pneumatisch oder elektrisch verschiebbar. Das obere Ende des Kolbens 251 ist als stempelähnlicher Aufsatz 252 ausgebildet, der im eingefahrenen Zustand des Kolbens 251 auf gleicher Höhe liegt, wie die Eingangsöffnung des Ansatzes 314 unterhalb der Grundplatte 313, so daß beim Einschieben des Wechselschlittens 310 der Aufsatz 252 in den Ansatz 314 gleitet, wie dies insbesondere aus Figur 5 ersichtlich ist.

Sobald diese in Figur 5 dargestellte Position erreicht ist, kann das Antriebsaggregat 250 den Kolben 251 nach oben schieben, bis zunächst die Trägerplatte 311 die zu messende Objektplatte 500 an die Proffilschienen 102 der Zählkammer 100 drückt und dann unter Zusammenpressung des Federelementes 312 die Grundplatte 313 von unten an den Rahmen 202 stößt. In dieser Position kann dann die Messung beginnen.

In Figur 7 ist in einer Querschnittsdarstellung gezeigt, wie das Proportionalzählrohr zur weiteren Automatisierung des Meßvorganges noch mit einem Magazin 400 ausgerüstet werden kann, das mehrere Aufnahmeebenen 410,...450 aufweist, die gabelförmig ausgestaltet sind, so daß einerseits mehrere zu messende radioaktiv markierte Platten 500...504 Auflage finden können und andererseits der Transportschlitten die Objektträger 500... von unten erfassen und von den Aufnahmeebenen 410... abheben kann. Durch eine gezielte vertikale Bewegung des Magazins 400 mit den Aufnahmeebenen können mehrere Objektträger 500... nacheinander vollautomatisch durchgemessen werden, wie dies im folgenden näher erläutert wird. Es versteht sich hierbei von selbst, daß die beschriebenen Abläufe beispielsweise durch einen zentralen Rechner gesteuert werden können, wenn entsprechende Sensoren oder Kontaktelemente an den verschiedenen Positionen des Wechselschlittens 310 bzw. des Magazins 400 angebracht sind, die dann sukzessive die einzelnen Antriebseinheiten steuern. Dies liegt im Bereich des fachmännischen Könnens und braucht daher im folgenden nicht näher erläutert zu werden.

Zur Beschreibung eines Arbeitszyklus wird zunächst von der in Figur 7 dargestellten Position ausgegangen:
Der Wechselschlitten 310 befindet sich außerhalb des Unterteils 220 in seiner vordersten Stellung derart, daß die Trägerplatte 311 zentral unterhalb des Objektträgers 501 zu liegen kommt. Wenn diese Position erreicht ist, fährt das Magazin 400 ein kleines Stück nach unten, so daß der Objektträger 501 nicht mehr auf der Aufnahmeebene 420 des Magazins 400, sondern ausschließlich auf der Trägerplatte 311 aufliegt. Wenn das Magazin 400 diese untere Warteposition erreicht hat, wird der Motor 316 aktiviert, der über einen Zahnstangentrieb den Wechselschlitten 310 in das Innere des Unterteils 220 einzieht, bis der Kopfaufsatz 252 des Antriebsaggregates 250 im Ansatz 314 auf der Unterseite der Grundplatte 313 eingefahren ist. Wenn der Wechselschlitten 310 diese hintere Endposition erreicht hat, wird über einen entsprechenden Kontakt das Antriebsaggregat 350 aktiviert, worauf dessen Kolben 251 die Grundplatte 313 mit der Trägerplatte 311 und dem zu messenden Objekt 501 nach oben schiebt, bis das Meßobjekt 501 an den Profilschienen 102 unterhalb der Zählkammer 100 anliegt. Gegen die Kraft des Federelementes 312 wird diese Aufwärtsbewegung sodann noch fortgeführt, bis die Grundplatte 313 an der Unterseite des Rahmens 202 anliegt. In dieser Position, die in den Figuren 4 und 5 dargestellt ist, kann dann die eigentliche Messung durchgeführt werden, die weiter unten noch näher erläutert wird.

Nach Abschluß der Messung läuft das Verfahren umgekehrt ab, der Wechselschlitten 310 fährt wieder mit dem gemessenen Objekt unterhalb der Aufnahmeebene 420 in das Magazin 400 ein, dieses wird soweit nach oben verfahren, bis das gemessene Objekt wieder auf der Aufnahmeebene 420 aufliegt und die Trägerplatte 311 freigibt. Daraufhin wird der Wechselschlitten wieder in das Unterteil 220 zurückgefahren und das Magazin hebt oder senkt sich je nach Wunsch um eine oder mehrere Aufnahmeebenen. Wenn dies erreicht ist, fährt der Wechselschlitten 310 wieder aus und nimmt das nächste Meßobjekt auf die Trägerplatte 311, worauf der oben beschriebene Zyklus wieder von neuem beginnt.

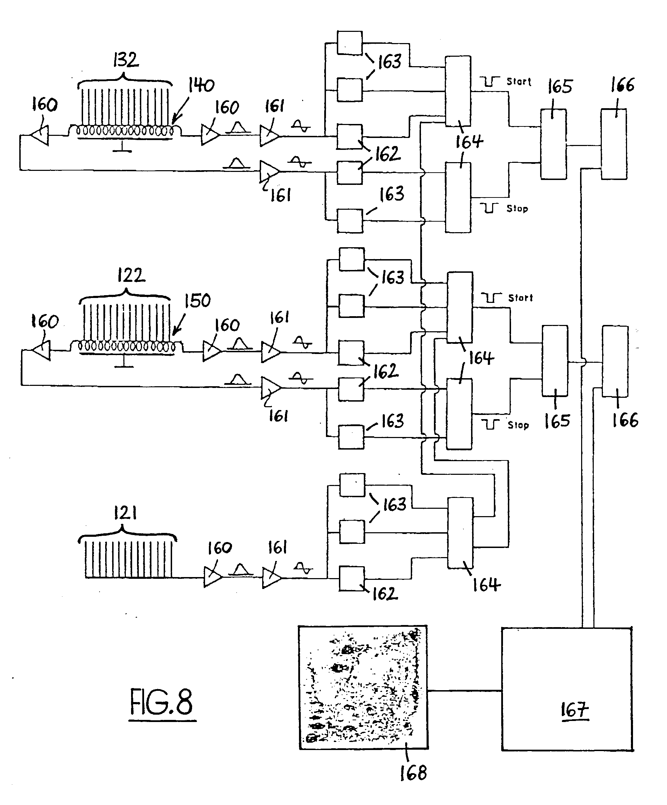

In Figur 8 ist ein Blockschaltbild einer Auswerteeinheit dargestellt. Diese Auswerteeinheit ist einer Zählkammer zugeordnet, wie sie in Figur 2 dargestellt ist, also mit zwei Kathodendrahtgittern 122 und 132 und einem Anodendrahtgitter 121. Schematisch ist dargestellt, wie die beiden Kathodendrahtgitter 122,132 jeweils mit "ihrer" Verzögerungsleitung 140 bzw. 150 verbunden sind. Die von den Drähten der jeweiligen Kathodendrahtgitter eingekoppelten Signale gelangen in an sich bekannter Weise an die beiden Enden M,N der Verzögerungsleitung 140 bzw. 150, von wo aus sie über Vorverstärker 160 und "Shaping"-Verstärker 161 zu Nulldurchgangsdiskriminatoren 162 und Impulshöhendiskriminatoren 163 geführt werden. Die Nulldurchgangsdiskriminatoren 162 dienen zur Laufzeitmessung, die Impulshöhendiskriminatoren 163 dienen zur Ausblendung eines unteren Impulshöhenbereiches z.B. des Rauschens, und/oder Impulsen, die über einem Maximalimpuls liegen. Wenn ein Impuls im derart definierten Impulsfenster seinen Nulldurchgang hat, geben die nachgeschalteten Koinzidenzstufen 164 ein Start- bzw. Stopsignal, wobei die Zeitspanne zwischen Start- und Stopsignal die Laufzeitdifferenz der beiden an den Enden der Verzögerungsleitung abgegriffenen Impulse bildet und somit die Ortsinformation beinhaltet. Den Koinzidenzstufen 164 ist jeweils ein gemeinsamer Zeit-Amplitudenkonverter 165 nachgeschaltet, der diese Zeitdifferenz in eine Amplitude unformt. Analog-Digital-Konverter 166 registrieren diese Impulse der Zeit-Amplitudenkonverter 165 und geben diese an eine Auswertelogik 167, in der dann aus den Laufzeitdifferenzen des Signals in den beiden Verzögerungsleitungen 140,150 der Entstehungsort des Impulses berechnet wird. Diese Werte werden abgespeichert und können dann auf einem Display 168 sichtbar gemacht werden, wobei sich dann beispielsweise das dargestellte Bild ergibt, das unmittelbar ein Bild der Radioaktivitätsverteilung auf der gemessenen Platte ist.

Die Ortsauflösung des Zählrohres kann noch weiter verbessert werden, wenn die Hochspannung so hoch gewählt ist, daß die Zählkammer aus dem Proportionalbereich in den "streamer"-Bereich gesteuert wird.

Auch eine weitere Erhöhung der Hochspannung ist möglich, wobei dann das Zählrohr als funkenkammer arbeitet.

Bei diesen Betriebsarten außerhalb des Proportionalbereichs ist die Bezeichnung "Proportionalzählrohr" entsprechend zu modifizieren.

## Patentansprüche

1. Zweidimensionales Proportionalzählrohr zur ortsempfindlichen Messung von ionisierender Strahlung in einer Ebene, mit einer Zählkammer mit einem Anodendrahtgitter und mindestens einem Kathodendrahtgitter, das/die im Abstand oberhalb und/oder unterhalb des Anodendrahtgitters angeordnet ist/sind, wobei die parallelen Drähte der zur Auslesung benutzten beiden Drahtgitter vorzugsweise orthogonal zueinander angeordnet sind und wobei jeder Draht dieser beiden oder mehreren Drahtgitter die in ihm erzeugten Impulse an einer definierten Stelle einer dem jeweiligen Drahtgitter zugeordneten Verzögerungsleitung einkoppelt, von der die Impulse einer Auswerteeinheit zur Ortsbestimmung zugeführt werden, wobei bei der Verwendung von zwei Kathodendrahtgittern die beiden Verzögerungsleitungen an diese angeschlossen sind,
dadurch gekennzeichnet, daß die Verzögerungsleitung (140,150) aus einem flachen Isolatorkern (142,152) besteht, um den die Wicklungen einer Spule gewickelt sind, daß auf dieser Spule ein einziger, als Kapazitätsstreifen (141,151) wirkender Metallstreifen in gleichmäßigem Abstand (D) von deren Oberseite gehalten ist, und daß die Drähte der beiden zur Auswertung verwendeten Drahtgitter (111,112; 122,132) in gleichen Abständen (y) und in direktem Kontakt an entsprechend beabstandete Windungen der Spule der kontinuierlichen Verzögerungsleitung (140,150) an deren Schmalseite aufgebracht sind, so daß diese Windungen mit einem Drahtanschluß versehen sind, und daß die Kapazität der Verzögerungsleitung (140,150) zumindest soviel größer als die Kapazitäten zwischen den Drähten innerhalb der einzelnen zur Auslesung verwendeten Drahtgitter gewählt ist, daß die störenden Kapazitäten der Drähte die Signalform der Impulse der Verzögerungsleitung nicht ungünstig beeinflussen.

2. Proportionalzählrohr nach Anspruch 1, dadurch gekennzeichnet, daß der Abstand (X,X1,X2) benachbarter Drahtgitter maximal 1 mm beträgt.

3. Proportionalzählrohr nach Anspruch 1, dadurch gekennzeichnet, daß die Induktivität (L) der Verzögerungsleitung etwa 10⁻⁴ H beträgt, ihre Kapazität etwa 10⁻⁹ F und ihr Wellenwiderstand Z = 320 Ohm.

4. Proportionalzählrohr nach Anspruch 3, dadurch gekennzeichnet, daß die Länge (1) der Verzögerungsleitung 20 cm beträgt, daß die Windungszahl 30/cm beträgt und der Abstand des Kapazitätsstreifens (141,151) von der Oberseite der Spule 20» beträgt, wobei der Abstand der Drähte der Auslesegitter untereinander 2 mm ist.

5. Proportionalzählrohr nach Anspruch 1, dadurch gekennzeichnet, daß die Drahtgitter (111,112,121,122,132) in einer geschlossenen Zählkammer (100) angeordnet sind, deren Seitenwandungen von mindestens einem Rahmen (110,120,130) gebildet werden.

6. Proportionalzählrohr nach Anspruch 1, dadurch gekennzeichnet, daß die Zählkammer (100) geschlossen ist und mit einem Zählgas gefüllt ist, das Zusätze von Methylal und/oder n-Pentan und/oder Freon und/oder CO₂ in einem Gesamtvolumenanteil von 1% bis 5% enthält.

7. Verfahren zum Betrieb des Proportionalzählrohrs nach Anspruch 1, dadurch gekennzeichnet, daß das Potential am Anodendrahtgitter (111,121) so hoch gewählt ist, daß das Zählrohr im "Streamer"-Bereich betrieben wird.

8. Verfahren zum Betrieb eines Proportionalzählrohrs nach Anspruch 1, dadurch gekennzeichnet, daß das Potential am Anodendrahtgitter (111,121) so hoch gewählt ist, daß das Zählrohr (100) als Funkenkammer arbeitet.

9. Proportionalzählrohr nach Anspruch 5, dadurch gekennzeichnet, daß die Zählkammer (100) innerhalb eines Gehäuses (200) stationär angeordnet ist.

10. Proportionalzählrohr nach Anspruch 9, dadurch gekennzeichnet, daß das Gehäuse (200) auf seiner Oberseite mit einem Fenster (201) versehen ist.

11. Proportionalzählrohr nach Anspruch 9, dadurch gekennzeichnet, daß das Gehäuse (200) zweiteilig ausgebildet ist, wobei im Oberteil (210) die Zählkammer (100) angeordnet ist, und der Boden des Oberteils (210) als Rahmen (202) ausgebildet ist, dessen Öffnung (203) unterhalb der Drahtgitter (111...) angeordnet ist, wobei dessen lichter Querschnitt zumindest der Fläche der Drahtgitter (111...) entspricht.

12. Proportionalzählrohr nach Anspruch 11, dadurch gekennzeichnet, daß das Oberteil (210) des Gehäuses (200) auf einem Unterteil (220) aufsitzt, in dem eine Einrichtung zur Zuführung von Objektträgern (500...) untergebracht ist.

13. Proportionalzählrohr nach Anspruch 11 und 12, dadurch gekennzeichnet, daß die Zuführungseinrichtung einen schubladenähnlichen Wechselschlitten (310) beinhaltet, der eine Trägerplatte (311) für einen Objektträger (500...) aufweist, die unterhalb der Öffnung (203) des Rahmens (202) des Oberteils (210) verfahrbar ist.

14. Proportionalzählrohr nach Anspruch 11-13, dadurch gekennzeichnet, daß die Trägerplatte (311) über ein Federelement (312) auf einer Grundplatte (313) des Wechselschlittens (310) gehalten ist.

15. Proportionalzählrohr nach Anspruch 11-14, dadurch gekennzeichnet, daß die Grundplatte (313) des Wechselschlittens (310) vertikal verfahrbar ist, wozu unterhalb der Öffnung (203) des Rahmens (202) ein Antriebsaggregat (250) mit einem Kolben (251) auf dem Boden des Unterteils (220) des Gehäuses (200) angeordnet ist, der in eingeschobener Position des Wechselschlittens (310) die Unterseite der Grundplatte (313) beaufschlagt und diese so weit nach oben verfährt, bis diese an der Unterseite des Rahmens (202) anliegt und die Trägerplatte (311) mit dem Objektträger (500) unter der Wirkung des Federelementes (312) an die Unterseite der Zählkammer (100) gepreßt wird.

16. Proportionalzählrohr nach Anspruch 15, dadurch gekennzeichnet, daß der Kolben (251) des Antriebsaggregates (250) an seinem vorderen Ende einen stempelartigen Aufsatz (252) aufweist, der in der unteren Position des Kolbens (251) in einem taschenähnlichen Ansatz (314) auf der Unterseite der Grundplatte (313) gleitet, wenn der Wechselschlitten (310) in seine eingeschobene Position fährt.

17. Proportionalzählrohr nach Anspruch 14, dadurch gekennzeichnet, daß der Wechselschlitten (310) in seitlich am Unterteil (220) angebrachten Teleskopschienen (230,231) gleitet.

18. Proportionalzählrohr nach Anspruch 13, dadurch gekennzeichnet, daß der Wechselschlitten (310) über einen Zahnstangenantrieb an seiner Unterseite und einen Motor (316) angetrieben wird.

19. Proportionalzählrohr nach Anspruch 15, dadurch gekennzeichnet, daß an der Unterseite der Zählkammer (100) Profilschienen (102) angebracht sind, an die die Trägerplatte (311) gedrückt wird.

20. Proportionalzählrohr nach Anspruch 15 und 17, dadurch gekennzeichnet, daß die Grundplatte (313) auf Winkelprofilen (240,241) aufliegt, die an der Innenseite der Teleskopschienen (230,231) befestigt sind.

21. Proportionalzählrohr nach Anspruch 14, dadurch gekennzeichnet, daß die Trägerplatte (311) über mehrere Teleskopelemente (317) auf der Grundplatte (313) abgestützt ist.

22. Proportionalzählrohr nach Anspruch 13, dadurch gekennzeichnet, daß vor der Einschuböffnung (260) des Wechselschlittens (310) im Unterteil (220) des Gehäuses (200) ein Magazin (400) positioniert ist, das mehrere Objektträger (500,501...) aufnimmt.

23. Proportionalzählrohr nach Anspruch 22, dadurch gekennzeichnet, daß das Magazin (400) aus mehreren horizontalen Aufnahmeebenen (410...450) besteht, zwischen die der Wechselschlitten (310) einfahrbar ist.

24. Proportionalzählrohr nach Anspruch 22 und 23, dadurch gekennzeichnet, daß das Magazin (400) so weit höhenverfahrbar ist, daß alle Aufnahmeebenen (410...450) vom Wechselschlitten (310) bedient werden können.

25. Proportionalzählrohr nach Anspruch 23, dadurch gekennzeichnet, daß die Aufnahmeebenen (410...450) gabelartig ausgebildet sind, derart, daß die Trägerplatte (311) des Wechselschlittens (310) vollständig unter die Objektträger (500,501 usw.) einfahrbar ist.

26. Proportionalzählrohr nach Anspruch 12, dadurch gekennzeichnet, daß Oberteil (210) und Unterteil (220) des Gehäuses (200) über ein Scharnier oder Gelenk (204) klappbar miteinander verbunden sind.

27. Proportionalzählrohr nach Anspruch 5, dadurch gekennzeichnet, daß auf der dem zu messenden Objekt zugewandten Seite der Zählkammer (100) eine Kollimatorplatte aus Metall, Kunststoff oder Glas aufgebracht ist.

28. Proportionalzählrohr nach Anspruch 27, dadurch gekennzeichnet, daß die Kollimatorplatte eine Lochplatte mit zylindrisch oder wabenartig ausgebildeten Löchern ist.

## Claims

1. Two-dimensional proportional counter for the position-sensitive measurement of ionising radiation in a plane, having a counting chamber with an anode wire lattice and at least one cathode wire lattice, which is or are disposed at a spacing above and/or below the anode wire lattice, the parallel wires of the two wire lattices used for the read-out being preferably disposed orthogonally relative to one another, and each wire of these two or more wire lattices introducing the pulses, produced therein, at a predetermined location on a delay line, which is associated with the respective wire lattice, the pulses being supplied from said delay line to an evaluation unit to determine the location, the two delay lines being connected to two cathode wire lattices when such are used, characterised in that the delay line (140, 150) comprises a flat insulator core (142, 152), around which the windings of a coil are wound, in that a single metal strip, acting as capacitance strip (141, 151), is retained at a uniform spacing (D) from the upper end of said coil, and in that the wires of the two wire lattices (111, 112; 122, 132), which are used for the evaluation, are mounted on the narrow side of the continuous delay line (140, 150) at identical spacings (y) from, and in direct contact with, correspondingly spaced windings of the coil of said line, so that these windings are provided with a wire connection, and in that the capacitance of the delay line (140, 150) is selected to be at least so much greater than the capacitances between the wires internally of the individual wire lattices used for the read-out that the interfering capacitances of the wires do not adversely affect the signal form of the pulses of the delay line.

2. Proportional counter according to claim 1, characterised in that the maximum spacing (X, X1, X2) between adjacent wire lattices is 1 mm.

3. Proportional counter according to claim 1, characterised in that the inductance (L) of the delay line is substantially 10⁻⁴ H, its capacitance is substantially 10⁻⁹ F, and its wave resistance Z is equal to 320 ohms.

4. Proportional counter according to claim 3, characterised in that the length (l) of the delay line is 20 cm, in that the number of windings is 30/cm, and the spacing between the capacitance strip (141, 151) and the upper end of the coil is 20 », the spacing between the wires of the read-out lattices being 2 mm.

5. Proportional counter according to claim 1, characterised in that the wire lattices (111, 112, 121, 122, 132) are disposed in a closed counting chamber (100), the lateral walls of which are formed by at least one frame (110, 120, 130).

6. Proportional counter according to claim 1, characterised in that the counting chamber (100) is closed and filled with a counting gas which contains additions of methylal and/or n-pentane and/or freon and/or CO₂ in a total percentage by volume of between 1 % and 5 %.

7. Method for operating the proportional counter according to claim 1, characterised in that the potential at the anode wire lattice (111, 121) is selected to be so high that the counter is operated in the "streamer" range.

8. Method for operating a proportional counter according to claim 1, characterised in that the potential at the anode wire lattice (111, 121) is selected to be so high that the counting chamber (100) operates as a spark chamber.

9. Proportional counter according to claim 5, characterised in that the counting chamber (100) is disposed in stationary manner internally of a housing (200).

10. Proportional counter according to claim 9, characterised in that the housing (200) is provided with a window (201) on its upper surface.

11. Proportional counter according to claim 9, characterised in that the housing (200) comprises two portions, the counting chamber (100) being disposed in the upper portion (210), and the base of the upper portion (210) being formed as frame (202), the aperture (203) of which is disposed beneath the wire lattices (111...), the internal cross-section of said frame corresponding to at least the area of the wire lattices (111...).

12. Proportional counter according to claim 11, characterised in that the upper portion (210) of the housing (200) is mounted on a lower portion (220), in which a means for supplying object carriers (500...) is accommodated.

13. Proportional counter according to claims 11 and 12, characterised in that the supply means includes a drawer-like interchangeable sliding carriage (310), which comprises a carrier plate (311) for an object carrier (500...), said carrier plate being displaceable beneath the aperture (203) in the frame (202) of the upper portion (210).

14. Proportional counter according to claims 11 to 13, characterised in that the carrier plate (311) is retained on a base plate (313) of the interchangeable sliding carriage (310) by means of a resilient member (312).

15. Proportional counter according to claims 11 to 14, characterised in that the base plate (313) of the interchangeable sliding carriage (310) is vertically displaceable, and for such purpose a drive unit (250) with a piston (251) is disposed beneath the aperture (203) in the frame (202) on the base of the lower portion (220) of the housing (200), which drive unit acts upon the underside of the base plate (313) when the interchangeable sliding carriage (310) is in its inserted position and displaces the underside so far upwardly until it abuts against the underside of the frame (202), and the carrier plate (311) with the object carrier (500) is pressed against the underside of the counting chamber (100) by the effect of the resilient member (312).

16. Proportional counter according to claim 15, characterised in that the piston (251) of the drive unit (250) has, at its front end, a stamp-like attachment (252) which, in the lower position of the piston (251), slides in a pocket-like extension member (314) on the underside of the base plate (313) when the interchangeable sliding carriage (310) travels into its inserted position.

17. Proportional counter according to claim 14, characterized in that the interchangeable sliding carriage (310) slides in telescopic rails (230, 231), which are mounted laterally on the lower portion (220).

18. Proportional counter according to claim 13, characterised in that the interchangeable sliding carriage (310) is driven via a toothed rod on its underside and a motor (316).

19. Proportional counter according to claim 15, characterized in that profile rails (102) are mounted on the underside of the counting chamber (100), the carrier plate (311) being pressed against said rails.

20. Proportional counter according to claims 15 and 17, characterised in that the base plate (313) rests on angular profiles (240, 241), which are mounted on the internal surface of the telescopic rails (230, 231).

21. Proportional counter according to claim 14, characterised in that the carrier plate (311) is supported on the base plate (313) by means of a plurality of telescopic members (317).

22. Proportional counter according to claim 13, characterised in that a magazine (400) is positioned upstream of the insert aperture (260) in the interchangeable sliding carriage (310) in the lower portion (220) of the housing (200) and accommodates a plurality of object carriers (500, 501...).

23. Proportional counter according to claim 22, characterised in that the magazine (400) comprises a plurality of horizontal receiving planes (410...450), between which the interchangeable sliding carriage (310) is insertable.

24. Proportional counter according to claims 22 and 23, characterised in that the magazine (400) is vertically displaceable to such an extent that all of the receiving planes (410...450) can be served by the interchangeable sliding carriage (310).

25. Proportional counter according to claim 23, characterised in that the receiving planes (410...450) have a bifurcated configuration such that the carrier plate (311) of the interchangeable sliding carriage (310) is completely insertable beneath the object carriers (500, 501, etc.).

26. Proportional counter according to claim 12, characterised in that the upper portion (210) and lower portion (220) of the housing (200) are interconnected in a pivotable manner by means of a hinge or pivot joint (204).

27. Proportional counter according to claim 5, characterised in that a collimator plate, formed from metal, plastics material or glass, is mounted on the side of the counting chamber (100) facing the object to be measured.

28. Proportional counter according to claim 27, characterised in that the collimator plate is a perforate plate having cylindrical or honeycomb-shaped holes.

## Revendications

1. Compteur proportionnel à deux dimensions pour la mesure et le repérage spatial de rayonnement ionisant dans un plan, avec une chambre de comptage munie d'un treillis anodique et d'un treillis cathodique, au moins, disposé(s) à distance au-dessus et/ou au-dessous du treillis anodique, les fils parallèles des deux treillis, utilisés pour la sélection, ayant de préférence une disposition mutuelle orthogonale, et chaque fil de ces deux ou multiples treillis injectant les impulsions, produites dans ces derniers, en un point défini d'une ligne de retard, associée au treillis respectif et transmettant les impulsions à une unité d'analyse pour le repérage spatial, les deux lignes de retard étant raccordées, en cas d'utilisation de deux treillis cathodiques, à ces deux treillis, caractérisé en ce que la ligne de retard (140, 150) se compose d'un noyau d'isolateur plat (142, 152), autour duquel sont enroulées les spires d'une bobine, en ce qu'un ruban métallique unique, faisant office de ruban capacitif (141, 151), est maintenu sur cette bobine à une distance régulière (D) de sa face supérieure, et en ce que les fils des deux treillis (111, 112; 122, 132), utilisés pour l'analyse, sont appliqués à distances égales (y) et au contact direct des spires, d'un écartement adéquat, de la bobine de la ligne de retard continue (140, 150), sur le petit côté de cette bobine, de sorte que ces spires sont munies d'un raccord de fil, et en ce que la capacité choisie de la ligne de retard (140, 150) est aussi élevée, du moins, que les capacités entre les fils à l'intérieur des treillis individuels, utilisés pour la sélection, de sorte que les capacités perturbatrices des fils n'ont aucune influence défavorable sur la forme du signal des impulsions de la ligne de retard.

2. Compteur proportionnel suivant la revendication 1, caractérisé en ce que l'écartement maximal (X, X1, X2) de treillis adjacents est de 1 mm.

3. Compteur proportionnel suivant la revendication 1, caractérisé en ce que l'inductance (L) de la ligne de retard est de l'ordre de 10⁻⁴, sa capacité de 10⁻⁹ F environ, et son impédance caractéristique Z de 320 ohms.

4. Compteur proportionnel suivant la revendication 3, caractérisé en ce que la longueur (l) de la ligne de retard est de 20 cm, en ce que le nombre de spires est égal à 30 spires/cm, et l'écartement du ruban capacitif (141, 151) par rapport au côté supérieur de la bobine est de 20», l'écartement mutuel des fils des grilles de sélection étant de 2 mm.

5. Compteur proportionnel suivant la revendication 1, caractérisé en ce que les treillis (111, 112, 121, 122, 132) sont disposés dans une chambre de comptage fermée (100), dont les parois latérales sont formées par un cadre (110, 120, 130), au moins.

6. Compteur proportionnel suivant la revendication 1, caractérisé en ce que la chambre de comptage (100) est fermée et remplie d'un gaz de comptage, qui comporte des additions de méthylal et/ou de n-pentane et/ou de Fréon et/ou de CO₂, d'un pourcentage en volume total de 1% à 5%.

7. Procédé d'exploitation du compteur proportionnel suivant la revendication 1, caractérisé par un choix du potentiel sur le treillis anodique (111, 121) suffisamment élevé, pour que le compteur soit exploité dans le domaine "streamer".

8. Procédé d'exploitation d'un compteur proportionnel suivant la revendication 1, caractérisé par un choix du potentiel sur le treillis anodique (111, 121) suffisamment élevé, pour que le compteur (100) fonctionne sous forme de chambre à étincelles.

9. Compteur proportionnel suivant la revendication 5, caractérisé en ce que la chambre de comptage (100) est disposée d'une manière stationnaire à l'intérieur d'un boîtier (200).

10. Compteur proportionnel suivant la revendication 9, caractérisé en ce que le boîtier (200) est muni d'une fenêtre (201) sur son côté supérieur.

11. Compteur proportionnel suivant la revendication 9, caractérisé en ce que le boîtier (200) est réalisé en deux parties, la chambre de comptage (100) étant disposée dans la partie supérieure (210), le fond de la partie supérieure (210) étant réalisé sous forme de cadre (202), dont l'ouverture (203) se situe au-dessous des treillis (111 etc...), et la largeur intérieure de ce cadre correspondant, du moins, à la superficie des treillis (111 ...).

12. Compteur proportionnel suivant la revendication 11, caractérisé en ce que la partie supérieure (210) du boîtier (200) repose sur une partie inférieure (220), dans laquelle est logé un dispositif d'alimentation en porte-objets (500 etc...).

13. Compteur proportionnel suivant l'une des revendications 11 et 12, caractérisé en ce que le dispositif d'alimentation comporte un chariot amovible (310) analogue à un tiroir, qui présente une plaque-support (311) pour un porte-objet (500 etc...), cette plaque pouvant se déplacer au-dessous de l'ouverture (203) du cadre (202) de la partie supérieure (210).

14. Compteur proportionnel suivant les revendications 11 à 13, caractérisé en ce que la plaque-support (311) est maintenue, par l'intermédiaire d'un élément à ressort (312), sur une plaque de base (313) du chariot amovible (310).

15. Compteur proportionnel suivant les revendications 11 à 14, caractérisé en ce que la plaque de base (313) du chariot amovible (310) est mobile dans le sens vertical, un groupe de commande (250), avec un piston (251), étant disposé à cet effet au-dessous de l'ouverture (203) du cadre (202), sur le fond de la partie inférieure (220) du boîtier (200), le piston sollicitant, en position d'insertion du chariot amovible (310), le côté inférieur de la plaque de base (313), et déplaçant cette dernière vers le haut, jusqu'à ce qu'elle s'applique sur le côté inférieur du cadre (202), et jusqu'à ce que la plaque-support (311), avec le porte-objet (500), soit pressée sur le côté inférieur de la chambre de comptage (100), sous l'effet de l'élément à ressort (312).

16. Compteur proportionnel suivant la revendication 15, caractérisé en ce que le piston (251) du groupe de commande (250) présente, sur son extrémité avant, un élément supérieur (252) en forme de tampon, qui glisse, en position basse du piston (251), dans une rallonge (314) analogue à une poche, prévue sur le côté inférieur de la plaque de base (313), lorsque le chariot amovible (310) se déplace dans sa position d'insertion.

17. Compteur proportionnel suivant la revendication 14, caractérisé en ce que le chariot amovible (310) glisse dans des rails télescopiques (230, 231), montés latéralement sur la partie inférieure (220).

18. Compteur proportionnel suivant la revendication 13, caractérisé en ce que le chariot amovible (310) est entraîné par l'intermédiaire d'une commande par crémaillère sur son côté inférieur, et par un moteur (316).

19. Compteur proportionnel suivant la revendication 15, caractérisé en ce que des rails de guidage (102), sur lesquels est pressée la plaque-support (311), sont montés sur la face inférieure de la chambre de comptage (100).

20. Compteur proportionnel suivant les revendications 15 et 17, caractérisé en ce que la plaque de base (313) repose sur des cornières (240, 241), fixées sur le côté interne des rails télescopiques (230, 231).

21. Compteur proportionnel suivant la revendication 14, caractérisé en ce que la plaque-support (311) s'appuie sur la plaque de base (313) par l'intermédiaire de plusieurs éléments télescopiques (317).

22. Compteur proportionnel suivant la revendication 13, caractérisé en ce qu'un magasin (400), qui reçoit plusieurs porte-objets (500, 501 ...), est positionné en amont de l'ouverture d'insertion (260) du chariot amovible (310), dans la partie inférieure (220) du boîtier (200).

23. Compteur proportionnel suivant la revendication 22, caractérisé en ce que le magasin (400) se compose de plusieurs plans de réception horizontaux (410 à 450), entre lesquels peut être introduit le chariot amovible (310).

24. Compteur proportionnel suivant les revendications 22 et 23, caractérisé en ce que le magasin (400) peut être suffisamment déplacé vers le haut, pour que tous les plans de réception (410 à 450) puissent être desservis par le chariot amovible (310).

25. Compteur proportionnel suivant la revendication 23, caractérisé en ce que les plans de réception (410 à 450) sont réalisés en forme de fourche, de sorte que la plaque-support (311) du chariot amovible (310) peut être totalement introduite au-dessous des porte-objets (500, 501 etc...).

26. Compteur proportionnel suivant la revendication 12, caractérisé en ce que la partie supérieure (210) et la partie inférieure (220) du boîtier (200) sont assemblées entre elles avec une possibilité de rabattement, par l'intermédiaire d'une charnière ou d'une articulation (204).

27. Compteur proportionnel suivant la revendication 5, caractérisé en ce qu'une plaque de collimateur en métal, matière plastique ou verre, est montée sur le côté de la chambre de comptage (100), tourné vers l'objet à mesurer.

28. Compteur proportionnel suivant la revendication 27, caractérisé en ce que la plaque de collimateur est une plaque perforée, avec des trous cylindriques ou en nid d'abeilles.
